# EUROPEAN PATENT APPLICATION

(11) **EP 4 700 877 A1**
(43) Date of publication of application: **25.02.2026**
(21) Application number: 25169946.8
(22) Date of filing: 11.04.2025
(51) Int. Cl.: H01M 10/04, H01M 50/533, H01M 50/538, H01M 50/536, H01M 50/54

(54) **SECONDARY BATTERY HAVING IMPROVED TAB-TO-CURRENT COLLECTOR WELDING AND METHOD OF MANUFACTURING THE SAME**

(30) Priority: 19.08.2024 KR 20240110806
(71) Applicant: SAMSUNG SDI CO., LTD., Yongin-si, Gyeonggi-do 17084 (KR)
(72) Inventor: YOON, JIHWAN, 17084 Yongin-si, Gyeonggi-do (KR)
(74) Representative: Gulde & Partner

(57) **Abstract**

A secondary battery includes: an electrode assembly (40) including a plurality of electrode plates, each including an electrode tab (44a, 44b) bent toward a central area of the electrode assembly (40); a current collector (41, 42) welded to the bent electrode tabs (44a, 44b); and a terminal (62, 63) electrically connected to the current collector (41, 42).

## Description

### BACKGROUND

### 1. Field

Aspects of embodiments of the present disclosure relate to a secondary battery having improved electrode tab-to-current collector welding and a method of manufacturing the same.

### 2. Discussion of Related Art

Different from primary batteries, which are not designed to be recharged, secondary batteries are batteries that are designed to be charged and discharged. Generally, a secondary battery includes an electrode assembly including a positive electrode plate, a negative electrode plate, and a separator. Electrode tabs to be electrically connected to external terminals are formed on each of the positive and negative electrode plates. The electrode tabs formed on each electrode plate are assembled together and welded to a subplate or current collector. The welding process is referred to as laser plate welding (LPW). The subplate or current collector is electrically connected to the external terminals.

Conventionally, two electrode tabs are formed on each polarity electrode plate. This prevents any electrode tabs from being left (or missed) without being welded to a current collector during an electrode tab-to-current collector welding process. In this case, because there are two electrode tabs, a welding process becomes complicated, and corresponding production costs and material costs are increased.

The above information disclosed in this Background section is for enhancement of understanding of the background of the present disclosure, and therefore, it may contain information that does not constitute a related (or prior) art.

### SUMMARY

Embodiments of the present disclosure are directed to simplifying a process of welding an electrode tab and a current collectors during a secondary battery manufacturing process and improving performance.

According to an aspect of the present disclosure, a secondary battery according to claim 1 is provided. The secondary battery includes: an electrode assembly including a plurality of electrode plates. Each of the electrode plates includes at least one electrode tab bent toward a central area of the electrode assembly. The secondary battery includes: a current collector welded to the bent electrode tabs. The secondary battery includes: a terminal electrically connected to the current collector. An advantage of this aspect may be that electrode tabs in particular of outer electrode plates can better be welded to the current collector.

According to an embodiment of the present disclosure, the plurality of electrode plates may be stacked on each other. The central area may correspond to half of a width of the electrode assembly in a stacking direction of the electrode plates.

According to an embodiment of the secondary battery, each of the electrode tabs may be bent in a curve. An advantage of this embodiment may be that curves avoid creases that may reduce life span of the tabs.

According to an embodiment of the secondary battery, the electrode assembly may be of a stack type electrode assembly or of a wound type electrode assembly. An advantage of this embodiment may be that different variations of electrode assemblies can be improved.

According to an embodiment of the secondary battery, the central area may correspond to about or exactly half of a stacking width of the stack type electrode assembly. An advantage of this embodiment may be that the bend electrode tabs can connect the current collector in a plane.

According to an embodiment of the secondary battery, the central area may be an air core area of the wound type electrode assembly. An advantage of this embodiment may be that also electrode tabs close to the central area can be large enough to provide a sufficiently connection area.

According to an embodiment of the secondary battery, lengths of the electrode tabs are the same. An advantage of this embodiment may be that the electrode tabs can be formed easily.

According to an embodiment of the secondary battery, lengths of the electrode tabs are different from other ones of the electrode tabs. An advantage of this embodiment may be that the electrode tabs can be bent easily.

According to an embodiment of the secondary battery, the central area may be arranged between a first group of electrode tabs and a second group of electrode tabs. The amount of electrode tabs in each of the first and second group may be identical of different. The bent electrode tabs of the first group may be free from overlap with the bent electrode tabs of the second group. The bent electrode tabs of the first group may exclusively overlap electrode tabs of the first group. The bent electrode tabs of the second group may exclusively overlap electrode tabs of the second group. The bent electrode tabs of the first group may at least partly overlap the bent electrode tabs of the second group. The first group of bent electrode tabs may at least partly mesh with or engage the second group of bent electrode tabs.

According to an embodiment of the secondary battery, a length of the electrode tab at an outer side of the electrode assembly is greater than a length of the electrode tab at a central area of the electrode assembly. For example, the lengths may decrease towards the central area. For example, the lengths may linearly decrease towards the central area. For example, the lengths may monotonically or strictly monotonically decrease towards the central area. For example, the lengths may decrease towards the central area along a curve.

According to another aspect of the present disclosure, a method of manufacturing a secondary battery according to claim 8 is provided. The method includes: manufacturing a plurality of electrode plates, each of the electrode plate including at least one electrode tab. The method includes: assembling the plurality of electrode plates to manufacture an electrode assembly. The method includes: bending each of the electrode tabs toward a central area of the electrode assembly. The method includes: bringing a current collector into close contact with the bent electrode tabs. The method includes: welding the current collector to the bent electrode tabs. The method includes: electrically connecting a terminal to the current collector. An advantage of this aspect may be that electrode tabs in particular of outer electrode plates can better be welded to the current collector.

According to an embodiment of the method, the bending of the electrode tabs may comprise bending each of the electrode tabs in a curve. An advantage of this embodiment may be that curves avoid creases that may reduce life span of the tabs.

According to an embodiment of the method, the assembling of the plurality of electrode plates may comprise stacking the plurality of electrode plates to manufacture a stack type electrode assembly.

According to an embodiment of the method, the central area may be an area corresponding to about or exactly half of a stacking width of the stack type electrode assembly. An advantage of this embodiment may be that the bend electrode tabs can connect the current collector in a plane.

According to an embodiment of the method, the assembling of the plurality of electrode plates may comprise winding the plurality of electrode plates to manufacture a wound type electrode assembly.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a top perspective view of a prismatic secondary battery according to some embodiments of the present disclosure;
FIG. 2 is an internal, cross-sectional view of the secondary battery taken along the line I-I' in FIG. 1;
FIG. 3 is an exploded schematic view of an electrode assembly in the secondary battery shown in FIG. 2;
FIGS. 4 to 6 are views describing a configuration of a conventional electrode assembly and laser plate welding;
FIG. 7 is a schematic view of an electrode assembly in which electrode plates shown in FIG. 3 are stacked according to some embodiments of the present disclosure;
FIG. 8 is a cross-sectional view taken along the line A-A' in FIG. 7 showing a current collector being welded to an electrode tab;
FIG. 9 illustrates an embodiment in which electrode tabs of a first group and electrode tabs of a second group have different lengths;
FIG. 10 is a plan view of a current collector being welded to electrode tabs bent in an arch shape from an outer side of an electrode assembly toward a central area;
FIG. 11 illustrates an electrode assembly of a secondary battery according to some other embodiments of the present disclosure;
FIG. 12 is a cross-sectional schematic view taken along the line B-B' in FIG. 11 an electrode assembly according to some embodiments;
FIG. 13 illustrates an embodiment in which electrode tabs of a first group and electrode tabs of a second group have different lengths;
FIG. 14 is a view of a secondary battery module in which secondary batteries according to embodiments of the present disclosure are arranged;
FIG. 15 is a view of a secondary battery pack including the secondary battery module shown in FIG. 14; and
FIG. 16 is a schematic view of a vehicle including the secondary battery pack shown in FIG. 15.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

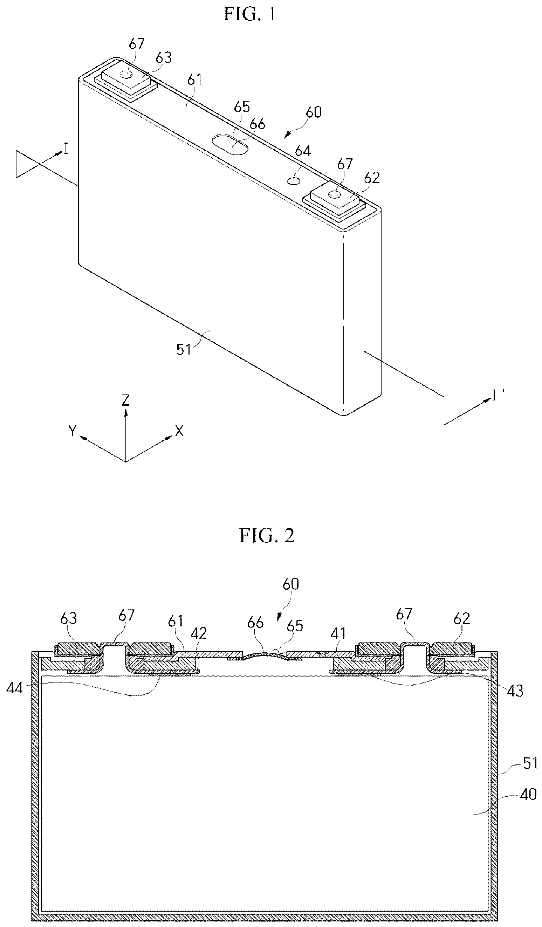

FIG. 1 is a top perspective view of a prismatic secondary battery according to some embodiments of the present disclosure.

First, the external appearance of the prismatic secondary battery will be described.

A case 51 defines an overall appearance of the prismatic secondary battery and may be made of a conductive metal, such as aluminum, aluminum alloy, or nickel-plated steel. In addition, the case 51 may provide a space for accommodating an electrode assembly therein.

A cap assembly 60 may include a cap plate 61 that covers an opening in the case 51. In some embodiments, the case 51 and the cap plate 61 may be made of a conductive material. Here, a first terminal 62 and a second terminal 63 may be electrically connected to respective positive and negative (or negative and positive) electrodes inside the case 51 and may be installed to protrude outwardly through the cap plate 61.

The cap plate 61 may have an electrolyte injection port 64 formed to receive a sealing plug (or seal pin) and a gas discharge hole 65. A vent (e.g., a gas discharge device 66) may be attached to the gas discharge hole 65. The gas discharge device 66 is opened (e.g., bursts) in response to excess gas generated inside the battery and performs a degassing function.

FIG. 2 is a cross-sectional view taken along the line I-I' in FIG. 1 according to some embodiments of the present disclosure. With reference to FIG. 2, the internal structure of the prismatic secondary battery and the coupling structure with the cap assembly 60 will be further described.

As shown in FIG. 2, the prismatic secondary battery may include an electrode assembly 40, a first current collector 41, the first terminal 62, a second current collector 42, the second terminal 63, the case 51, and the cap assembly 60.

An electrode assembly 40 may be formed by winding or stacking a stack of a first electrode plate, a separator, and a second electrode plate, which are each formed as thin plates or films. When the electrode assembly 40 is a wound stack, a winding axis may be parallel to the longitudinal direction of the case 51. In some other embodiments, the electrode assembly 40 is a stack type rather than a winding type, but the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent (or folded) into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, when the first electrode plate is manufactured, the first electrode tab 43 is formed by being cut in advance to protrude to one side of the electrode assembly 40, or the first electrode tab 43 may protrude to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode tab 44 may protrude to the other side of the electrode assembly more than (e.g., farther than or beyond) the separator without being separately cut.

The separator prevents or substantially reduces instances of a short circuit between the first electrode plate and the second electrode plate while allowing for the movement of lithium ions therebetween. The separator may be made of, for example, a polyethylene film, a polypropylene film, a polyethylene-polypropylene film, or the like.

In some embodiments, the electrode assembly 40 is accommodated in the case 51 along with an electrolyte.

In the electrode assembly 40, the first current collector 41 and the second current collector 42 may be welded and connected to the first electrode tab 43 extending from the first electrode plate and the second electrode tab 44 extending from the second electrode plate, respectively. In some embodiments in which the first electrode tab 43 and the second electrode tab 44 are located at the top of the electrode assembly 40, the first and second current collectors are located at the top of the electrode assembly 40.

As illustrated in FIG. 2, the first current collector 41 and the second current collector 42 are connected to the first terminal 62 and the second terminal 63 through connection members 67, respectively. In some embodiments, the connection members 67 may each have an outer peripheral surface that is threaded and may be fastened to the first terminal 62 and the second terminal 63 by screwing. However, the present disclosure is not limited thereto. For example, the connection members 67 may also be coupled to the first terminal 62 and the second terminal 63 by riveting or welding.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

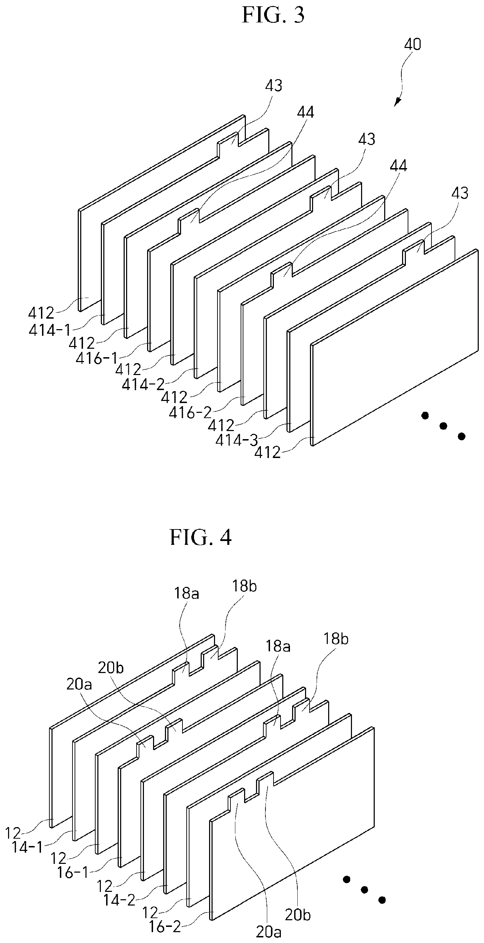

FIG. 3 is an exploded schematic view of an electrode assembly 40 accommodated in the secondary battery shown in FIG. 2.

FIG. 3 illustrates electrode plates and separators arranged in the order of a 1-1 electrode plate 414-1, a separator 412, a 1-2 electrode plate 416-1, a separator 412, a 2-1 electrode plate 414-2, a separator 412, a 2-2 electrode plate 416-2, a separator 412, a 3-1 electrode plate 414-3, a separator 412, a 3-2 electrode plate, ... , but the present disclosure is not limited to such an arrangement.

According to some embodiments of the present disclosure, a first electrode tab 43 and a second electrode tab 44 may be formed on a first electrode plate 414-n (n=1, 2, 3,...) and a second electrode plate 416-n, respectively. The first electrode tab 43 and the second electrode tab 44 electrically connect electrode plates to external terminals. To electrically connect each electrode tab 43 or 44 and the external terminal, a subplate or a current collector may be welded to the electrode tab 43 or 44 of the electrode plate and may be connected to the external terminal. This has been described above with reference to FIG. 2. A process of welding the electrode tab 43 or 44 of the electrode plate and the subplate or current collector may be referred to as laser plate welding (LPW).

FIGS. 4 to 6 illustrate a configuration of a conventional electrode assembly and LPW.

Different from the embodiment of the present disclosure shown in FIG. 3, in the conventional electrode plate, as shown in FIG. 4, two electrode tabs 18a and 18b are formed on a first electrode plate 14-n (for example, a positive electrode plate), and similarly, two electrode tabs 20a and 20b are formed on a second electrode plate 16-n (for example, a negative electrode plate). This prevents any electrode tabs from being left out without being welded to a current collector in an LPW process (for example, because the number of electrode plates for each polarity often exceeds 100, there may be tabs that are not welded when more than 100 electrode tabs for electrodes for each polarity are welded to current collectors.

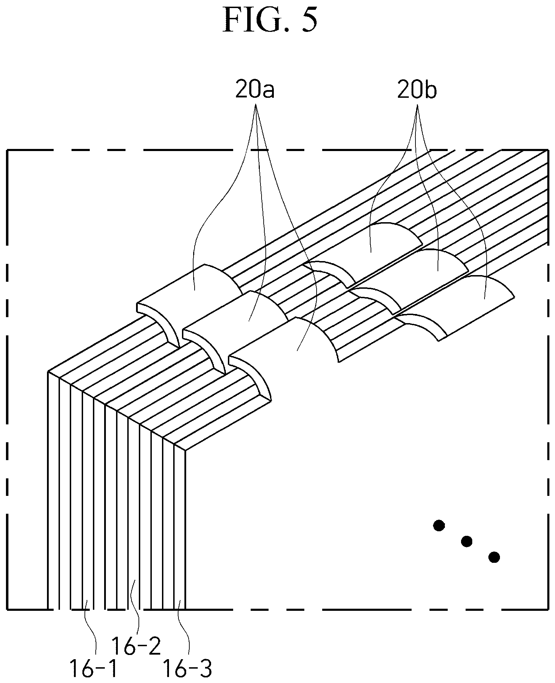

As shown in FIG. 5, two electrode tabs 18a and 18b or 20a and 20b formed on the electrode plate 14-n or 16-n for each polarity are bent in opposite directions, and a subplate or current collector is placed thereon to perform LPW (only the electrode tabs 20a and 20b of the electrode plate 16-n are shown in FIG. 5).

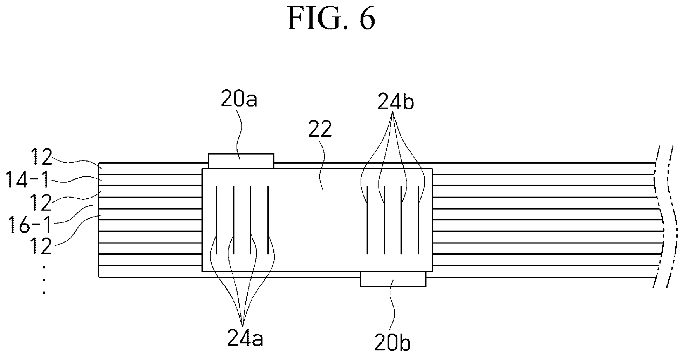

FIG. 6 is a plan view illustrating a subplate or current collector 22 welded to an electrode tab. As shown in FIG. 5, because the two electrode tabs 18a and 18b or 20a and 20b are bent in opposite directions, end portions of the electrode tabs 20a and 20b of the electrode plate positioned at peripheral sides protrude out of an area of the current collector 22 as shown in FIG. 6. The end portions of the electrode tabs 20a and 20b protruding to the side should be folded back toward the current collector and fixed with tape for finishing. In such a structure in which each of existing positive and negative plates includes two electrode tabs, an LPW process is complex and incurs corresponding costs.

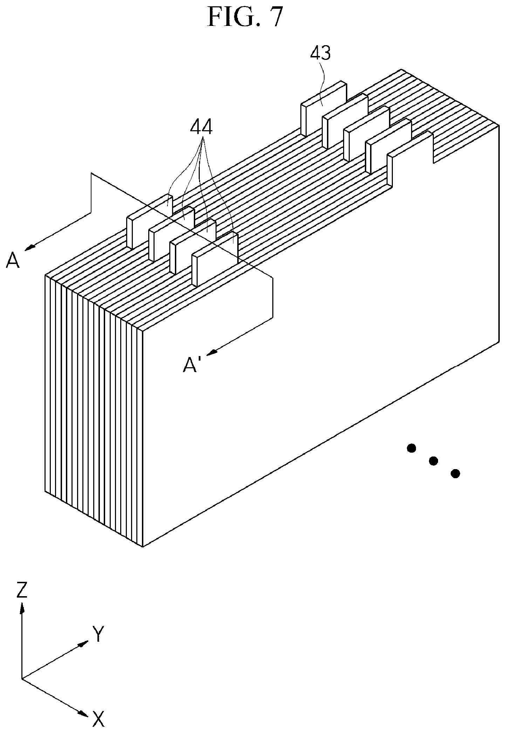

Returning to the present disclosure again, FIG. 7 is a schematic view of an electrode assembly in which electrode plates shown in FIG. 3 are stacked according to some embodiments of the present disclosure. It can be seen that one electrode tab 43 or 44 is formed for (or in) each electrode plate. Although FIG. 7 illustrates a small number of electrode plates being stacked, in the case of an actual product, a much greater number of electrode plates are stacked to constitute an electrode assembly (for example, 100 electrode plates are stacked for each polarity).

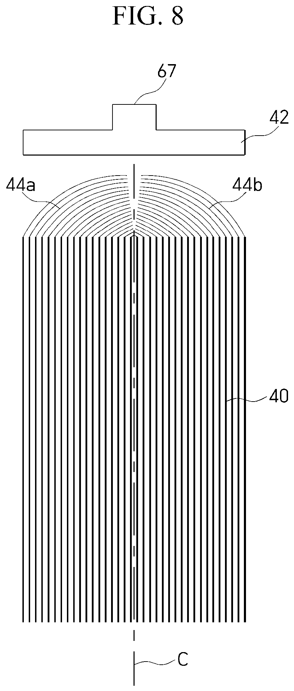

FIG. 8 is a cross-sectional view taken along the line A-A' in FIG. 7 and illustrates a state in which a current collector is welded to an electrode tab. FIG. 8 illustrates electrode tabs formed on some electrode plates with polarity.

Electrode tabs, which are each formed as one electrode tab on each electrode plate (e.g., each electrode plate has only one electrode tab), may be approximately divided in half into a tab group of 44a and a tab group of 44b, and the electrode tabs of each group 44a, 44b may be bent in an arch shape toward a central area of a stack type electrode assembly 40 and assembled, and a current collector 42 (see, e.g., FIG. 2) may be placed thereon before welding. As a welding method, laser welding, friction welding, and ultrasonic welding may be used, but the present disclosure is not limited thereto. A tool may be used to bring electrode tabs of the tab groups 44a and 44b into close contact with the current collector 42 during welding.

In some embodiments, the central area may be an area corresponding to approximately half of a stacking width of the stack type electrode assembly 40 shown in FIG. 8. For example, an adjacent area including a longitudinal axis center line C of the electrode assembly 40 may be regarded as the central area.

In some embodiments, as shown in FIG. 8, the electrode tabs of the tab groups 44a and 44b of the electrode assembly 40 may be bent in a curve to form an arch shape together, but the present disclosure is not limited thereto.

These electrode tabs can be molded into an arch shape and welded to simplify a secondary battery manufacturing process, and in particular, the number of welding processes or a welding amount can be reduced to reduce process costs and improve process stability. In addition, because all electrode tabs are bent toward a central area and assembled, the occurrence of welding omissions when a subplate or current collector is welded can be significantly reduced.

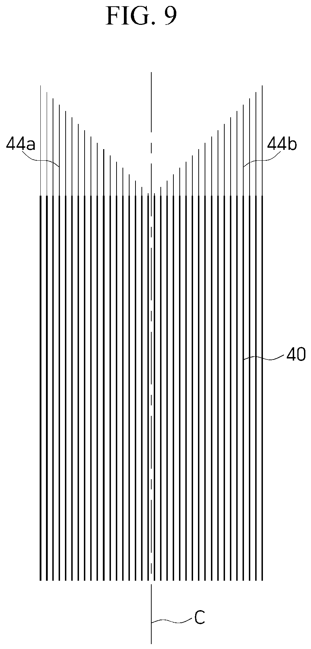

FIG. 9 illustrates an embodiment in which electrode tabs have different lengths such that when electrode tabs of a first group 44a and electrode tabs of a second group 44b are bent toward a central area as shown in FIG. 8, the bending of the electrode tabs is smoothly performed and an excessive overlapping area is not formed.

Here, the length of the electrode tab of the electrode plate positioned at an outer side of an electrode assembly 40 may be greater than a length of the electrode tab of the electrode plate positioned at an inner area. For example, the length of the electrode tab from among the electrode tabs may gradually decrease toward the central area. Accordingly, as shown in FIG. 9, the lengths of the electrode tabs of the first group 44a may gradually decrease toward a longitudinal axis center line C, and the lengths of the electrode tabs of the second group 44b may gradually decrease toward a longitudinal axis center line C.

To form electrode tabs having different lengths for each electrode plate, it may be easier to cut the electrode plate by using laser notching rather than conventional mold notching because the length of the electrode tab may be set relatively freely during laser notching. However, notching by using a mold may also be used.

In other embodiments, the electrode tabs of the first group 44a and the electrode tabs of the second group 44b may have the same length. In this embodiment, one electrode tab may be formed per electrode plate and bent in an arch shape toward a central area from both sides of an electrode assembly to weld a current collector can be sufficiently achieved.

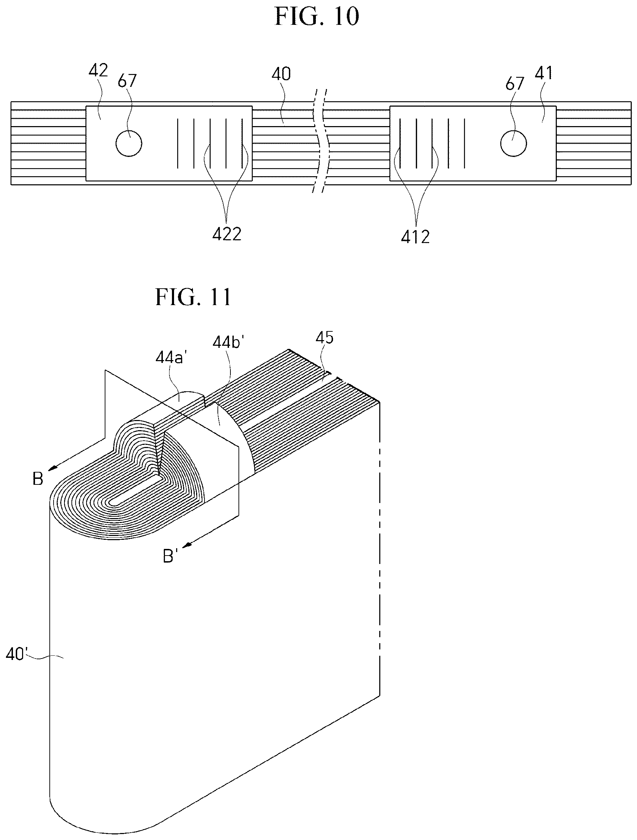

FIG. 10 is a plan view of a state in which a current collector is welded to electrode tabs bent in an arch shape from an outer side of the electrode assembly to a central area. FIG. 10 shows a current collector 42 (e.g., a second current collector in FIG. 2) welded on a left side of an upper surface of an electrode assembly 40 and a current collector 41 (e.g., a first current collector in FIG. 2) welded on a right side thereof. Portions welded to electrode tabs are denoted by 422 and 412. A connection member 67 of each of the current collectors 42 and 41 is a connection member connected to an external terminal and has been described above with reference to FIG. 2.

FIG. 11 illustrates an electrode assembly 40' of a secondary battery according to some other embodiments of the present disclosure. The electrode assembly 40' in this embodiment is a wound type and has an air core area 45 at a central portion (the electrode assembly 40 shown in FIG. 7 described above is referred to as a stack type).

Electrode tabs, which are each formed as one electrode tab on each electrode plate, may be approximately divided in half into a tab group 44a' and a tab group 44b', and the electrode tabs of each group may be bent in an arch shape toward a central area of the wound type electrode assembly 40' and assembled, and a current collector may be placed thereon to perform welding.

In this embodiment, the central area may be the air core area 45 at a position corresponding to approximately half of a width of the wound type electrode assembly 40'. For example, an adjacent area including the air core area 45 of the wound type electrode assembly 40' may be referred to as the central area.

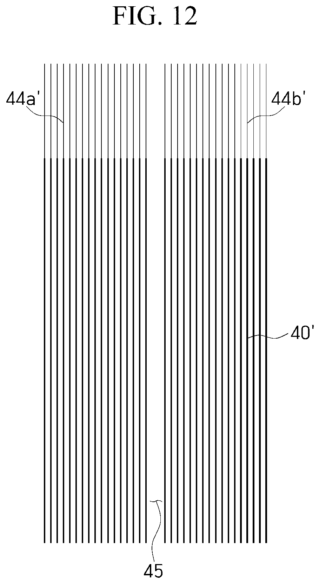

FIG. 12 is a schematic, cross-sectional view taken along the line B-B' in FIG. 11. In the case of a wound type electrode assembly, even when lengths of electrode tabs of first and second tab groups 44a' and 44b' of electrode plates are the same, an interval is formed between the electrode tab 44a' of a first group and the electrode tab 44b' of a second group due to an air core area 45, and it is easy to bend the electrode tabs at both sides in an arch shape.

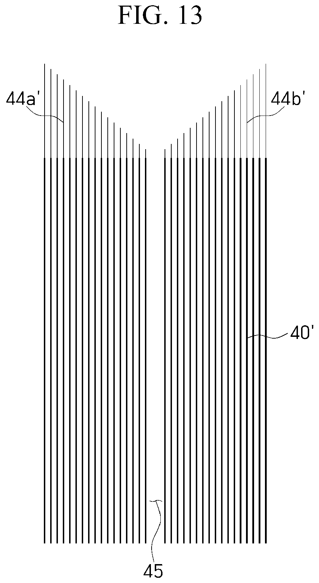

FIG. 13 illustrates an embodiment in which electrode tabs have different lengths such that when electrode tabs of a first group 44a' and electrode tabs of a second group 44b' are bent toward an air core area 45, the bending of the electrode tabs is smoothly performed and an excessive overlapping area is not formed.

In this embodiment, the length of the electrode tab of the electrode plate positioned at an outer side of an electrode assembly 40 may be greater than a length of the electrode tab of the electrode plate positioned at a central area. For example, the length of the electrode tab from among the electrode tabs may gradually decrease toward the air core area 45. Accordingly, as shown in FIG. 13, the lengths of the electrode tabs of the first group 44a' may gradually decrease toward the air core area 45, and the lengths of the electrode tabs of the second group 44b' may gradually decrease toward the air core area 45.

To form electrode tabs having different lengths for each electrode plate, it may be easier to cut the electrode plate by using laser notching than conventional mold notching because the length of the electrode tab may be set relatively freely during laser notching. However, notching by using a mold may also be used.

A method of manufacturing a secondary battery according to some embodiments of the present disclosure will be described. The method of manufacturing a secondary battery according to embodiments of the present disclosure may include manufacturing a plurality of electrode plates on which electrode tabs are formed, assembling the plurality of electrode plates to manufacture an electrode assembly; welding a current collector to the electrode tabs formed on the electrode plates of the electrode assembly, and electrically connecting a terminal to the current collector. The welding of the current collector may include bending each of the electrode tabs of the plurality of electrode plates of the electrode assembly toward a central area of the electrode assembly and bringing the current collector into close contact with and welding to the bent electrode tabs.

In some embodiments, the bending of the electrode tabs may include bending each of the electrode tabs of the plurality of electrode plates of the electrode assembly in a curve.

In some embodiments, the assembling of the plurality of electrode plates to manufacture the electrode assembly may include stacking the plurality of electrode plates to manufacture a stack type electrode assembly. In such an embodiment, the central area may be an area at a position corresponding to half of a stacking width of the stack type electrode assembly.

In some embodiments, the assembling of the plurality of electrode plates to manufacture the electrode assembly may include winding the plurality of electrode plates to manufacture a wound type electrode assembly. In such an embodiment, the central area may be an air core area of the wound type electrode assembly.

In some embodiments, the manufacturing of the plurality of electrode plates on which the electrode tabs are formed may include forming lengths of the electrode tabs of the plurality of electrode plates to be the same. In some other embodiments, the manufacturing of the plurality of electrode plates on which the electrode tabs are formed may include forming the electrode tabs of the plurality of electrode plates having different lengths.

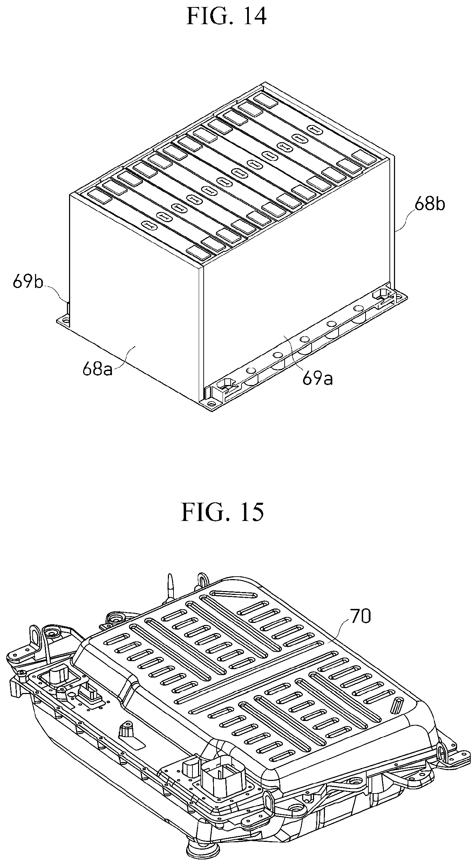

FIG. 14 is a perspective view of a secondary battery module in which secondary batteries according to embodiments of the present disclosure are arranged. With the increase in secondary battery capacity necessary for driving electric vehicles or the like, a secondary battery module may be manufactured by arranging a plurality of secondary battery cells transversely and/or longitudinally and connecting them together. The plurality of secondary batteries may be arranged in a space defined by a pair of facing end plates 68a and 68b and a pair of facing side plates 69a and 69b. The secondary batteries may be arranged in an arrangement direction and number to obtain desired voltage and current specifications.

FIG. 15 is a perspective view of a battery pack 70 according to embodiments of the present disclosure. Referring to FIG. 15, the battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown.

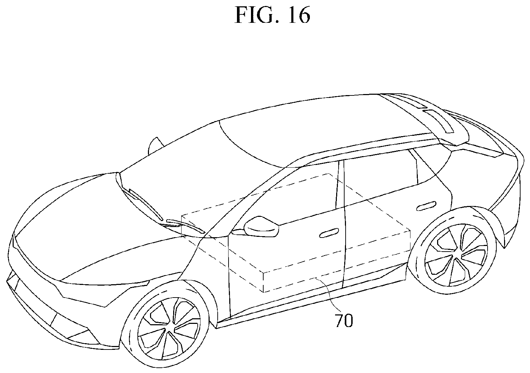

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto. FIG. 16 shows a vehicle that includes the battery pack 70 shown in FIG. 15 on the lower body thereof. The vehicle may operate by (e.g., may be powered by) receiving power from the battery pack 70.

According to embodiments of the present disclosure, an electrode tab formed on an electrode plate for each polarity can be bent in an arch shape and welded to simplify a secondary battery manufacturing process, and in particular, the number of welding processes or a welding amount can be reduced to reduce process costs and ensure process stability. In addition, because all electrode tabs are bent toward a central area and assembled together, the occurrence of welding omissions when a subplate or current collector is welded can be significantly reduced.

Although the present disclosure has been described above with respect to embodiments thereof, the present disclosure is not limited thereto. Various modifications and variations can be made thereto by those skilled in the art within the present disclosure as defined by the appended claims.

## Claims

1. A secondary battery comprising:
an electrode assembly (40, 40') comprising a plurality of electrode plates, each of the electrode plates comprising an electrode tab (44a, 44b) bent toward a central area of the electrode assembly (40, 40');
a current collector (41, 42) welded to the bent electrode tabs (44a, 44b); and
a terminal electrically connected to the current collector (41, 42).

2. The secondary battery as claimed in claim 1, wherein each of the electrode tabs (44a, 44b) is bent in a curve.

3. The secondary battery as claimed in claim 1 or 2, wherein the electrode assembly (40, 40') is one of a stack type electrode assembly (40, 40') and a wound type electrode assembly (40, 40').

4. The secondary battery as claimed in claim 3, wherein the central area corresponds to half of a stacking width of the stack type electrode assembly (40, 40').

5. The secondary battery as claimed in claim 3, wherein the central area is an air core area (45) of the wound type electrode assembly (40, 40').

6. The secondary battery as claimed in any of claims 1 to 5, wherein lengths of the electrode tabs (44a, 44b) are the same as each other.

7. The secondary battery as claimed in any of claims 1 to 5, wherein lengths of the electrode tabs (44a, 44b) are different from other ones of the electrode tabs (44a, 44b), and
wherein a length of the electrode tab (44a, 44b) at an outer side of the electrode assembly (40, 40') is greater than a length of the electrode tab (44a, 44b) at a central area of the electrode assembly (40, 40').

8. A method of manufacturing a secondary battery, the method comprising:
manufacturing a plurality of electrode plates, each of the electrode plate comprising an electrode tab (44a, 44b);
assembling the plurality of electrode plates to manufacture an electrode assembly (40, 40');
bending each of the electrode tabs (44a, 44b) toward a central area of the electrode assembly (40, 40');
bringing a current collector (41, 42) into close contact with the bent electrode tabs (44a, 44b) and welding the current collector (41, 42) to the bent electrode tabs (44a, 44b); and
electrically connecting a terminal to the current collector (41, 42).

9. The method as claimed in claim 8, wherein the bending of the electrode tabs (44a, 44b) comprises bending each of the electrode tabs (44a, 44b) in a curve.

10. The method as claimed in claim 8 or 9, wherein the assembling of the plurality of electrode plates comprises stacking the plurality of electrode plates to manufacture a stack type electrode assembly (40, 40').

11. The method as claimed in claim 10, wherein the central area is an area corresponding to half of a stacking width of the stack type electrode assembly (40, 40').

12. The method as claimed in claim 8 or 9, wherein the assembling of the plurality of electrode plates comprises winding the plurality of electrode plates to manufacture a wound type electrode assembly (40, 40').

13. The method as claimed in claim 12, wherein the central area is an air core area (45) of the wound type electrode assembly (40, 40').

14. The method as claimed in any of claims 8 to 13, wherein the manufacturing of the plurality of electrode plates comprises forming lengths of the electrode tabs (44a, 44b) of the plurality of electrode plates to be the same as each other.

15. The method as claimed in any of claims 8 to 14, wherein the manufacturing of the plurality of electrode plates comprises forming lengths of the electrode tabs (44a, 44b) of the plurality of electrode plates to be different from other ones of the electrode tabs (44a, 44b).
